# EUROPEAN PATENT APPLICATION

(11) **EP 3 820 232 A1**
(43) Date of publication of application: **12.05.2021**
(21) Application number: 19207838.4
(22) Date of filing: 07.11.2019
(51) Int. Cl.: H04W 74/08, H04W 72/12

(54) **USER EQUIPMENT AND SCHEDULING NODE**

(71) Applicant: Panasonic Intellectual Property Corporation of America, Torrance, CA 90503 (US)
(72) Inventor: SHAH, Rikin, 63225 Langen (DE); TAO, Ming-Hung, 63225 Langen (DE); SUZUKI, Hidetoshi, Osaka-shi, Osaka 540-6207 (JP); KUANG, Quan, 63225 Langen (DE)
(74) Representative: Grünecker Patent- und Rechtsanwälte PartG mbB

(57) **Abstract**

Provided are a user equipment (UE), a scheduling node, and communication methods for a UE and a scheduling node. The UE comprises a transceiver which, in operation, performs listen before talk, LBT and circuitry which, in operation, performs at least one of: incrementing a counter upon determining LBT failure, starting a triggering timer upon determining LBT failure if the triggering timer is not running, and determining whether the counter has reached a threshold value upon expiry of the triggering timer; and incrementing the counter upon determining a number N of consecutive LBT failures due to ongoing LBT backoff. The circuitry generates a indicating consistent LBT failure upon determining that the counter has reached the threshold value, and the transceiver, in operation, declares consistent LBT failure.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates preventing unnecessary switching of a channel by a UE in unlicensed operation.

In an embodiment, the techniques disclosed herein feature a user equipment (UE) comprising a transceiver which, in operation, performs listen before talk, LBT; and circuitry which, in operation, performs at least one of incrementing a counter upon determining LBT failure, starting a triggering timer upon determining LBT failure if the triggering timer is not running, and determining whether the counter has reached a threshold value upon expiry of the triggering timer; and incrementing the counter upon determining a number N of consecutive LBT failures due to ongoing LBT backoff; and declaring consistent LBT failure upon determining that the counter has reached the threshold value; wherein the transceiver, in operation, declare the consistent LBT failure.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a diagram illustrating a listen before talk (LBT) mechanism in NR-unlicensed;
- **Fig. 7**: is a flow chart illustrating an uplink LBT procedure;
- **Fig. 8**: is a diagram showing a configuration of a LBT failure detection timer;
- **Fig. 9**: is a diagram showing another configuration of a LBT failure detection timer;
- **Fig. 10**: is a block diagram showing a UE (user equipment) and a scheduling node;
- **Fig. 11**: is a block diagram showing UE circuitry;
- **Fig. 12**: is a block diagram showing UE circuitry;
- **Fig. 13**: is a flow chart showing a UE method and a scheduling node method;
- **Fig. 14**: is a diagram illustrating a LBT failure detection timer and a triggering timer;
- **Fig. 15**: is a is a diagram illustrating a LBT failure detection timer and a triggering timer;
- **Fig. 16**: is a flow chart showing a LBT method using a triggering timer; and
- **Fig. 17**: is a flow chart showing a LBT method using a number N of consecutive LBT failures due to ongoing backoff.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

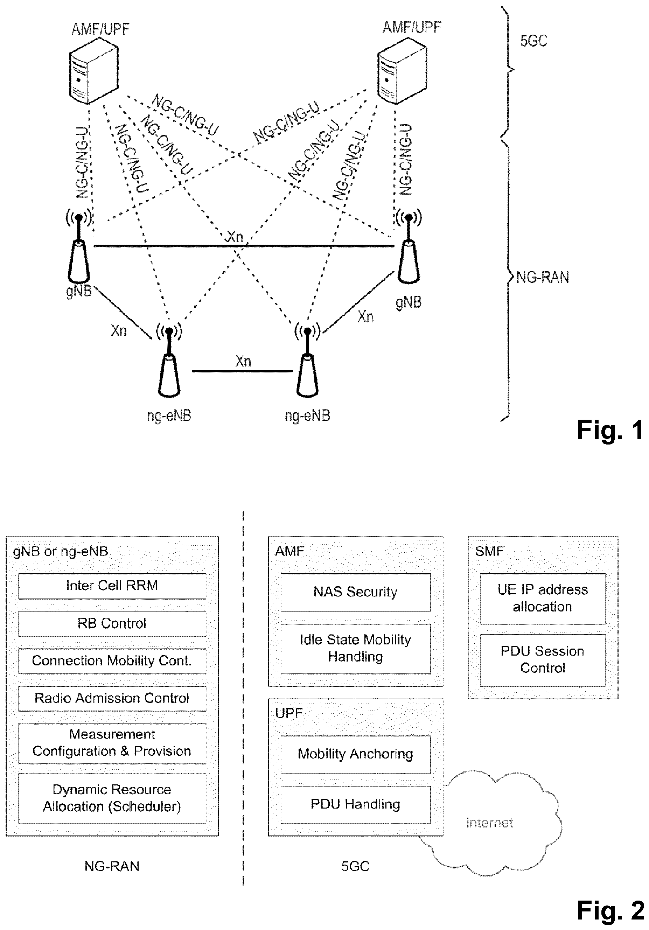

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ (Hybrid Automatic Repeat Request) processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, Transmission Time Interval, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS (Quality of Service) Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU (Protocol Data Unit) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL (uplink/downlink) rate enforcement;
- Uplink Traffic verification (SDF (Service Data Flow) to QoS flow mapping);
- Downlink packet buffering and downlink data notification triggering.

Finally, the Session Management function, SMF, hosts the following main functions:
- Session Management;
- UE IP (Internet Protocol) address allocation and management;
- Selection and control of UP (user plane) function;
- Configures traffic steering at User Plane Function, UPF, to route traffic to proper destination;
- Control part of policy enforcement and QoS;
- Downlink Data Notification.

### RRC connection setup and reconfiguration procedures

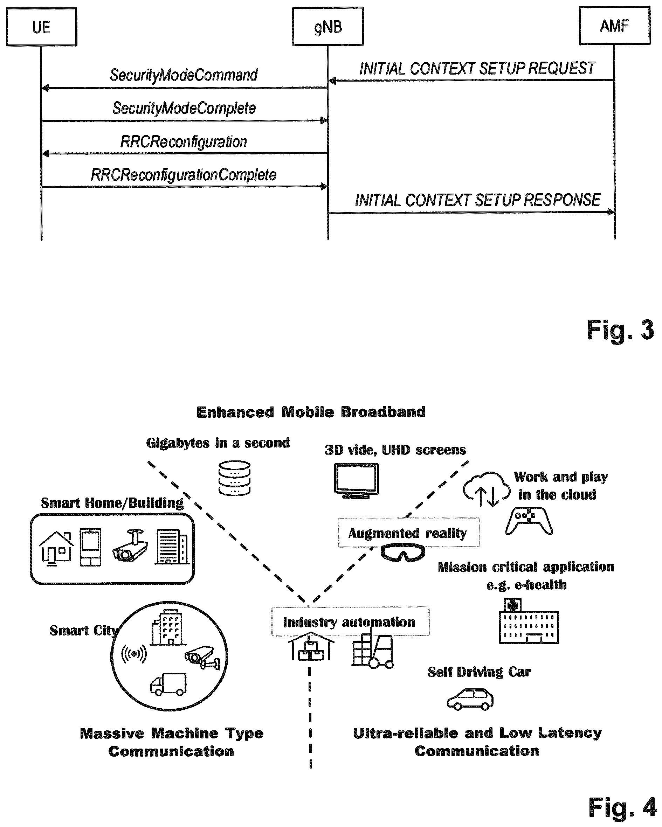

**Fig. 3** illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

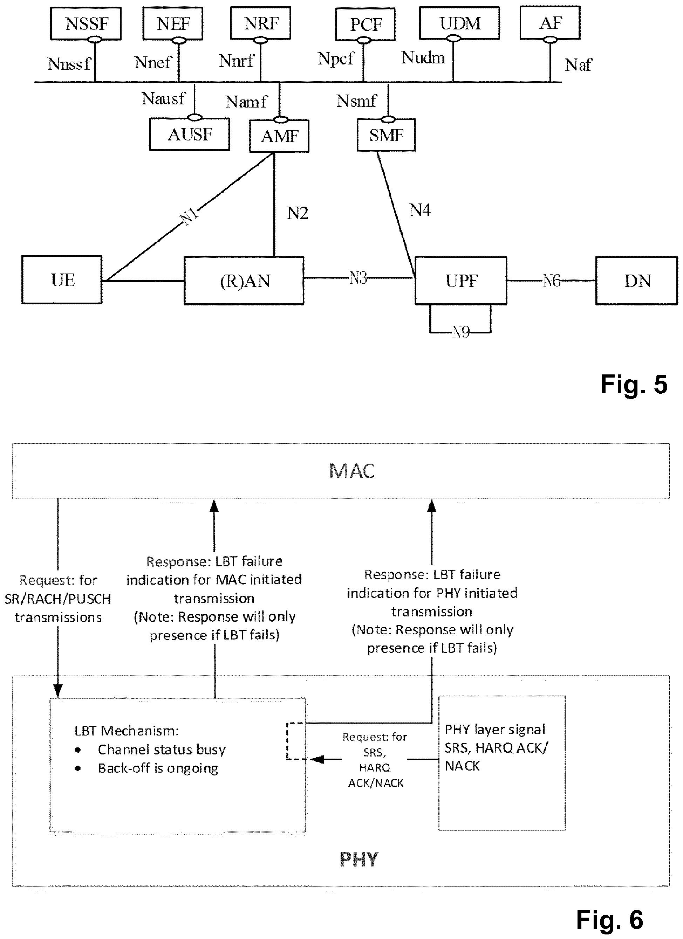

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc) of the 5GC to establish a PDU session including a radio bearer between a gNodeB and a UE in accordance with the QoS requirement and control circuitry, which, in operation, performs the services using the established PDU session.

A terminal is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node or scheduling node, e.g. forming a part of the network for providing services to terminals. A base station is a network node, which provides wireless access to terminals.

In 3GPP, NR-based operation in an unlicensed spectrum (NR-U) is studied. Therein, at least for a band where it is not possible to guarantee, e.g. by regulation, the absence of Wi-Fi or other competing systems or radio access technologies (RATs), clear channel assessment, e.g. LBT (listen before talk) may be performed.

The LBT procedure is defined as a mechanism by which an equipment applies a clear channel assessment (CCA) check before using the channel. The CCA utilizes at least energy detection to determine the presence or absence of other signals on a channel in order to determine if a channel is occupied or clear, respectively. European and Japanese regulations, for instance, mandate the usage of LBT in the unlicensed bands. Apart from regulatory requirements, this carrier sensing via LBT is one way for fair sharing of the unlicensed spectrum, and hence it is considered to be a vital feature for fair and friendly operation in the unlicensed spectrum in a single global solution framework.

The channel is considered occupied if the detected energy level exceeds a configured CCA threshold (e.g. for Europe, -73dBm/MHz, see ETSI 301 893, under clause 4.8.3), and conversely is considered to be free if the detected power level is below the configured CCA threshold. If the channel is classified as free, the device is allowed to transmit immediately. The maximum transmit duration is restricted in order to facilitate fair resource sharing with other devices operating on the same band.

The channel access schemes for NR-based access for unlicensed spectrum can be classified into the following categories CAT1 (Category 1) to CAT4 (Category 4) (see 38.889 v16.0.0 specification, section 8.2):

### Category 1: Immediate transmission after a short switching gap

- This is used for a transmitter to immediately transmit after a switching gap inside a COT.
- The switching gap from reception to transmission is to accommodate the transceiver turnaround time and is no longer than 16 µs.

### Category 2: LBT without random back-off

- The duration of time that the channel is sensed to be idle before the transmitting entity transmits is deterministic.

### Category 3: LBT with random back-off with a contention window of fixed size

- The LBT procedure has the following procedure as one of its components. The transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel.

### -Category 4: LBT with random back-off with a contention window of variable size

- The LBT procedure has the following as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

For different transmissions in a COT and different channels/signals to be transmitted, different categories of channel access schemes can be used.

In NR, uplink channel access procedures may be similar to LTE (see for example 3GPP specification 37.213 v15.2.0). For instance, Channel Access Priority Classes for the uplink may be as shown in the following Table 1.

**Table 1: Channel Access Priority Class for UL (see Table 4.2.1-1 in section 4.2 of 3GPP specification 37.213 v15.2.0)**

| **Channel Access Priority Class (***p***)** | *mₚ* | *CW*_{min,*p*} | *CW*_{max,*p*} | *T*_{*ulm*cot,*p*} | **allowed** *CWₚ* **sizes** |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 ms or 10 ms | {15,31,63,127,255,511,1023} |
| 4 | 7 | 15 | 1023 | 6 ms or 10 ms | {15,31,63,127,255,511,1023} |
| NOTE 1: For *p* = 3,4, *T*_{*ulm*cot,*p*} =10ms if the higher layer parameter *'absenceOfAnyOtherTechnology-r14'* indicates TRUE, otherwise, *T*_{*ulm*cot,*p*} =6ms. | | | | | |
| NOTE 2: When *T*_{*ulm*cot,*p*} =6ms it may be increased to 8 ms by inserting one or more gaps. The minimum duration of a gap shall be 100 µs. The maximum duration before including any such gap shall be 6 ms. | | | | | |

The UE may transmit the transmission using Type 1 channel access procedure after first sensing the channel to be idle during the slot durations of a defer duration *T_{d}*; and after the counter *N* is zero in step 4. The counter *N* is adjusted by sensing the channel for additional slot duration(s) according to the steps described below. (see the 37.213 3GPP specification, section 4.2.1.1).
1) set *N* = *Nᵢₙᵢₜ*, where *Nᵢₙᵢₜ* is a random number uniformly distributed between 0 and *CWₚ*, and go to step 4;
2) if *N* > 0 and the UE chooses to decrement the counter, set *N* = *N* - 1;
3) sense the channel for an additional slot duration, and if the additional slot duration is idle, go to step 4; else, go to step 5;
4) if *N* = 0, stop; else, go to step 2.
5) sense the channel until either a busy slot is detected within an additional defer duration *T_{d}* or all the slots of the additional defer duration *T_{d}* are detected to be idle;
6) if the channel is sensed to be idle during all the slot durations of the additional defer duration *T_{d}*, go to step 4; else, go to step 5;

If the UE has not transmitted a transmission(s) are performed after step 4 in the procedure above, the UE may transmit a transmission, if the channel is sensed to be idle at least in a slot duration *Tₛₗ* when the UE is ready to transmit the UL transmission, and if the channel has been sensed to be idle during all the slot durations of a defer duration *T_{d}* immediately before the UL transmission. If the channel has not been sensed to be idle in a slot duration *Tₛₗ* when the UE first senses the channel after it is ready to transmit, or if the channel has not been sensed to be idle during any of the slot durations of a defer duration *T_{d}* immediately before the intended transmission, the UE proceeds to step 1 after sensing the channel to be idle during the slot durations of a defer duration *T_{d}*.

The defer duration *T_{d}* consists of duration *T_{f}* = 16*us* immediately followed by *mₚ* consecutive slot durations where each slot duration is *Tₛₗ* = 9*us*, and *T_{f}* includes an idle slot duration *Tₛₗ* at start of *T_{f}*;

A slot duration *Tₛₗ* is considered to be idle if the UE senses the channel during the slot duration, and the power detected by the UE for at least 4*us* within the slot duration is less than energy detection threshold *X*_{Thresh}. Otherwise, the slot duration *Tₛₗ* is considered to be busy.

*CW*_{min,*p*} ≤ *CWₚ* ≤ *CW*_{max,*p*} is the contention window. *CWₚ* adjustment is described in sub clause 4.2.2.

*CW*_{min,*p*} and *CW*_{max,*p*} are chosen before step 1 of the procedure above.

*mₚ*, *CW*_{min,*p*} and *CW*_{max,*p*} are based on channel access priority class signalled to the UE, as shown in Table 4.2.1-1.

If the UL UE uses Type 2 channel access procedure for a UL transmission, the UE may transmit the UL transmission immediately after sensing the channel to be idle for at least a sensing interval *T*_{short_ul} = 25*us*. *T*_{short_ul} consists of a duration *T_{f}* = 16*us* immediately followed by one slot duration *Tₛₗ* = 9*us* and *T_{f}* includes an idle slot duration *Tₛₗ* at start of *T_{f}*. The channel is considered to be idle for *T*_{short_ul} if it is sensed to be idle during the slot durations of *T*_{short_ul} (see the 37.213 3gpp specification, section 4.2.1.2).

An exemplary overall LBT framework is illustrated in **Fig. 6****.** As can be seen in the figure, a transmission request can be initiated by the MAC layer (e.g. for SR (scheduling request), RACH (Random Access Channel) and handed to the physical layer, or PUSCH (Physical UplinkShared Channel) transmissions) as well as by the physical layer (for PHY layer signals including SRS (Sounding Reference Signal) and HARQ ACK/NACK (Acknowledgement / Negative Acknowledgement) singling). Therein, it should be noted that a MAC initiated transmission also includes transmissions of data from layers higher than the MAC layer, which the MAC layer initiates in response to receiving data and being initiated from a higher layer. When receiving a transmission request, an LBT mechanism is performed on the physical layer, where it is determined whether the channel status is idle, the channel status is busy, or whether backoff (or "LBT backoff") is ongoing. Both a busy channel status and ongoing backoff are cases of LBT failure in which the requested transmission cannot be performed in the transmission occasion for which the LBT has been performed. In response to LBT failure for both PHY-initiated transmissions and MAC-initiated transmissions, the PHY layer sends an LBT failure indication to the MAC layer. A response to a transmission request from the PHY layer to the MAC layer will only be present if LBT fails. Otherwise, the transmission is performed.

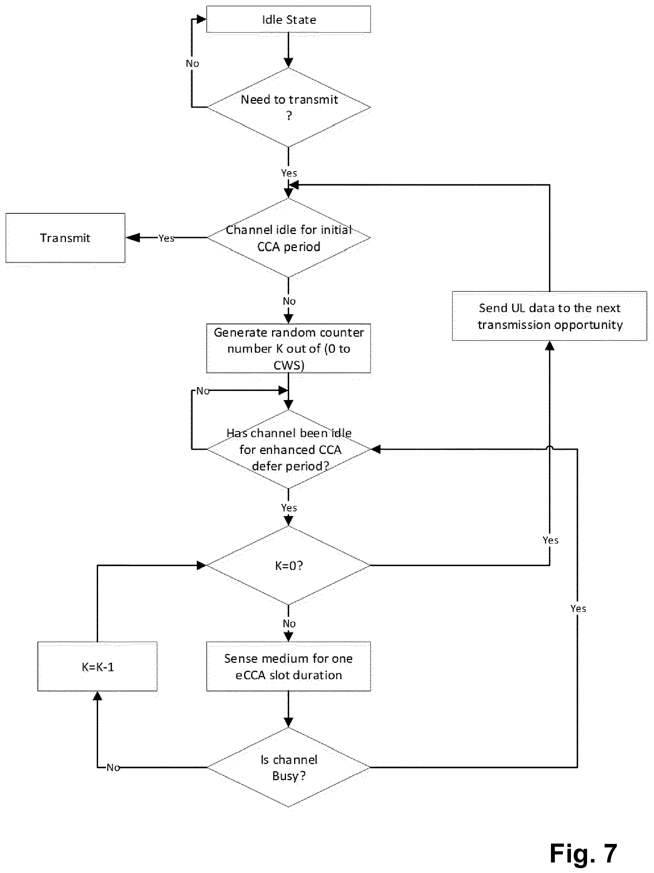

Details on an exemplary uplink LBT procedure are shown in **Fig. 7****.** In particular, if a UE does not need to perform an uplink transmission (e.g. a PHY initiated or MAC initiated transmission), it returns or remains in an idle state. If the UE needs to transmit, it checks whether the channel is idle for an initial CCA period, and, if yes, performs the uplink transmission. If the channel is determined not to be idle, a random counter number K is generated out of the range from 0 to a contention window size (CWS). The random counter number K may correspond to an LBT-category 4 (LBT-CAT-4) parameter. Then, after generating the counter number K (the random counter K corresponding to the parameter N in the above description of steps 1) to 6)), it is checked whether the channel has been idle for an enhanced CCA (i.e. additional slot duration which is described in the above steps. Additional slot duration can be referred as enhanced CCA (eCCA) and LBT back-off.) window size, until the result of this check is positive. If the channel has been idle for the eCCA window size, it is tested whether K=0. If yes, the UL data is initiated to be send at the next transmission opportunity, and the procedure returns to the step of determining whether the channel is idle for the initial CCE period. IF K is larger than zero, the medium or channel is sense for one eCCA slot duration. As a result of the sensing, it is determined whether the channel is busy. If the channel is not busy, the value of K is set to K-1, and it is checked again whether K=0. If the channel is busy, the procedure returns to checking whether the channel has been idle for the eCCA defer period. "Ongoing backoff" means that the period in which random counter K is counting down to zero.

However, when using the LBT mechanism described with respect to Figures 6 and 7, it may occur that if a channel is always or consistently busy, a UE may not be able to perform an uplink transmission in time. In this case, in order performing the uplink transmission more timely or in time may be facilitated by the UE switching to another channel. For example, a channel comprises a bandwidth part (BWP) or a subband within the same or another bandwidth part.

Therefore, the MAC layer may have a mechanism to declare a "consistent UL LBT failure" event or situation, and it may be facilitated for the UE to switch to another channel. In particular, a mechanism may be adopted in the MAC specification to handle the UL LBT failure, where "consistent" UL LBT failures are used for problem detection.

Such a MAC layer mechanism or Layer 2 (L2) LBT failure mechanism may take into account any LBT failure, regardless of the UL transmission type. This implies that an overall framework for consistent LBT failure detection should be able to receive both LBT failure indications in response to MAC initiated or requested transmissions and LBT failure responses due to Physical layer initiated transmissions. Therefore, an LBT failure mechanism may take into account any LBT failure regardless of the UL transmission type.

Regarding the question how to detect UL LBT problems and criteria or conditions for determining declaring consistent LBT failure, a baseline mechanism may be applied based on the following elements:
- Both a timer, such as a "LBT failure detection timer", and a counter are introduced. The counter is incremented (e.g. by one) and the LBT failure detection timer started or restarted when a LBT failure happens. Upon receiving LBT failure indication, the MAC layer entity (e.g. MAC layer circuitry of the UE) starts/restarts the LBT failure detection timer and increments the counter. The LBT failure detection timer is started when LBT failure happens while the LBT failure detection timer is not running, and restarted or reset when LBT failure happens while the LBT failure detection timer is already running.
- The counter is reset (e.g., set to zero) when the LBT failure indication timer expires.
- A "threshold" for the maximum number of LBT failures, which triggers the "consistent" LBT failure event, is used. If the counter reaches a configured threshold value, the UE declares "consistent LBT failure", which means that the UE triggers or declares a "consistent LBT failure event".

When the UL LBT failure counter reaches a configured maximum number of attempts, the UE triggers a consistent LBT failure event and may perform actions for recovery from a consistent UL LBT failure, e.g. to inform the gNB of the persistent or consistent LBT failure. Upon triggering a consistent LBT failure event, the UE first attempts to switch a channel such as the BWP. E.g., the UE attempts to perform random access on a different BWP in the same cell in which RACH (Random Access Channel) is configured. Once N configured BWPs are exhausted, the UE shall trigger RRC re-establishment procedure (e.g. a cell change) if the consistent UL LBT failure was detected on the current cell, where "N" is the number of configured BWPs with configured PRACH (Physical Random Access Channel) resources. If N is larger than one, it is up to the UE implementation which BWP the UE selects.

In applying the above baseline mechanism, a difficulty may arise in configuring a proper LBT failure detection timer and counter so as to avoid "too early" declaration of the consistent LBT failure. A reason for this difficulty is that LBT failure indications are generally aperiodic in nature. Namely, different transmissions, including MAC layer initiated and PHY layer initiated transmissions, may occur at different instances in time, and there is no particular periodicity for these transmission as well as their failure due to a busy channel.

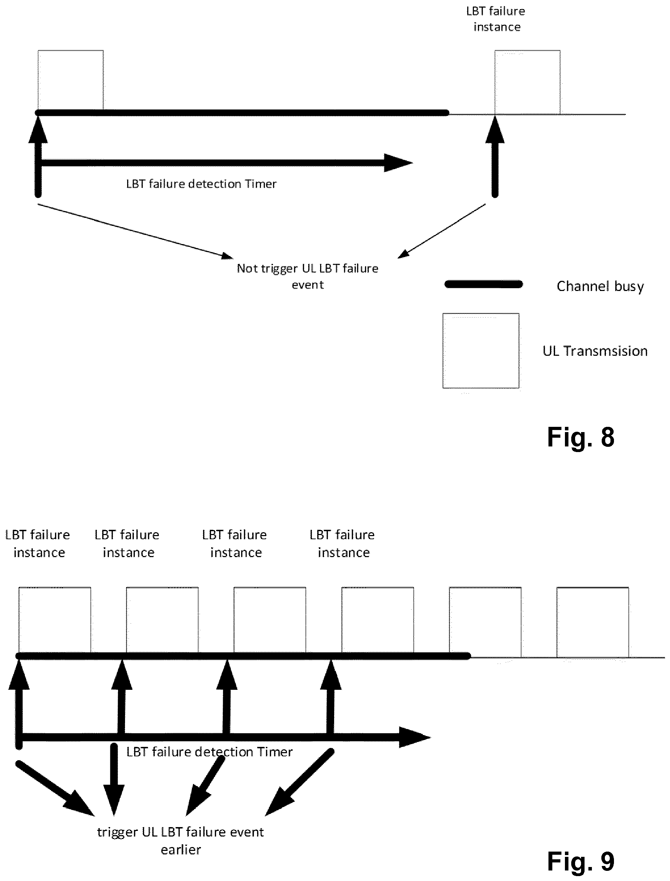

On the one hand, if a small value is chosen for the duration of the LBT failure detection timer, the duration may approximately gap or interval between two adjacent UL transmissions or transmission occasions, or even less than the gap. Such a case of the timer value being "too short" or "too small" is shown in **Fig. 8****.** With such a short timer value, a UE may hardly or seldom declare consistent LBT failure, or declare consistent LBT failure "too late", as can be seen in Fig. 8. As a result, the UE may be stuck in the same channel, such as BWP, where it cannot perform UL transmissions due to the channel being busy. However, this may be resolved by configuring a longer timer value, e.g. based on longer UL transmission gaps or covering more UL transmissions or transmission occasions.

On the other hand, if a large value is chosen for the duration of the LBT failure detection timer, the timer duration may cover multiple UL transmissions or UL transmission occasions. Such a case of the timer duration being "too large" or "too long" is illustrated in **Fig. 9****.** With such a large timer value, the UE may declare consistent UL LBT failure rather easily and frequently, or "too early", as can be seen in Fig. 9. As a result, when declaring the UL LBT failure event easily and often, the UE may unnecessarily switch the channel, such as BWP, on which it operates, or re-establish the connection.

The present disclosure provides techniques of detection of consistent UL LBT failure in NR-Unlicensed for preventing "too early" or frequent declaration of UL LBT failure, and thus avoid unnecessary switching of an operating channel or BWP of the UE.

Namely, a triggering timer (which may be used in addition to the LBT failure detection timer) and/or an LBT backoff indication (provided in addition to the LBT failure indication) are introduced, which facilitate prohibiting or preventing the UE declaring the consistent LBT failure too early. Thereby, the triggering timer may be configured by network, and the LBT back off indication may be generated by a lower layer than MAC layer, e.g. PHY layer.

The triggering timer and/or the LBT backoff indication which are provided so as to delay declaration and reporting of consistent LBT failure. By providing at least one of the LBT failure indication and the triggering timer, the present disclosure may facilitate achieving that the UE does not switch the BWP unnecessarily easily of often, but only switches its BWP or other type of channel (subband etc.), or reestablishes its RRC connection, when the channel condition, such as occupation by the unlicensed band /channel possibly by other RATs (Radio Access Technologies) is consistently bad, or the channel is consistently busy.

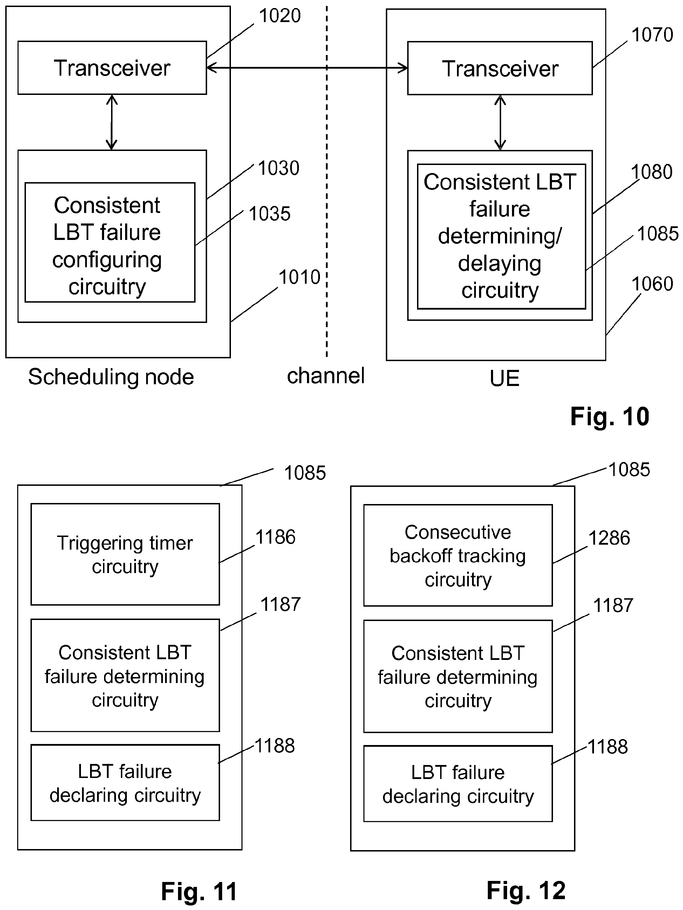

In particular, provided is a user equipment (UE) 1060, which is shown in **Fig. 10**. The UE comprises a transceiver 1070 ("UE transceiver") and circuitry 1080 ("UE circuitry") such as processing circuitry.

The transceiver 1070, in operation performs listen before talk. For instance, the UE circuitry 1080 controls the UE transceiver 1070 to sense a channel by performing measurements.

The UE circuitry 1080, in operation performs at least one of:
- starting a triggering timer upon determining LBT failure if the triggering timer is not already running when the LBT failure is detected and reported, and incrementing a counter upon determining LBT failure.
- incrementing a counter upon determining a number N of consecutive LBT failures due to ongoing backoff.

The UE circuitry 1080, in operation, further declares or indicates consistent LBT failure upon determining that the counter has reached a threshold value. In the former case where a triggering timer is maintained, the value of the counter is checked only upon expiry of the triggering timer to determine whether the threshold value for triggering the consistent LBT failure event has been reached.

When declaring consistent LBT failure (e.g. triggering a consistent LBT failure event), the UE circuitry 1080 may control the UE transceiver 1070 to perform at least one of the above described actions for recovery from a consistent UL LBT failure, namely:
a channel switch, such as a BWP switch, and
if channel switches to a configured (e.g. RRC-configured) number of BWPs has failed, trigger a re-establishment of a connection (e.g. RRC connection) in another cell.

The counter may correspond to or be similar to the counter used in the above-described baseline mechanism. However, occasions at which the counter is incremented may vary, as the counter may be increased either upon each determining of LBT failure due to the channel being busy or upon determining N consecutive LBT failures due to ongoing backoff.

Both the triggering timer and the number N of consecutive failures due to ongoing LBT backoff are maintained or kept track of so as to delay declaring of consistent LBT failure. In particular, while the triggering timer is running, the number of LBT failures is not checked for determining whether the threshold value has been reached, and therefore a consistent LBT failure event is not declared or indicated. Also, when the counter is incremented for each N consecutive LBT failures due to ongoing backoff rather than for each LBT failure due to ongoing backoff, the counting of the counter is slowed down, and the reaching of the threshold thus delayed.

For instance, the number N of consecutive LBT failures and/or the triggering timer are kept and maintained at the MAC layer of the UE 1060 or UE circuitry 1080. E.g., the UE circuitry 1080 comprises consistent LBT failure determining and delaying circuitry 1085.

Exemplary consistent LBT failure determining and delaying circuitry 1085 is shown in **Figures 11 and 12**. For instance, the LBT failure determining and delaying circuitry 1085 may comprise, e.g. within MAC layer circuitry, consistent LBT failure determining circuitry 1187 and consistent LBT failure declaring circuitry 1188. As can further be seen, the consistent LBT failure determining and delaying circuitry 1085 may comprise at least one of triggering timer circuitry 1186 (or triggering timer maintaining circuitry), which maintains and keeps track of the triggering timer, and consecutive backoff tracking circuitry 1286 LBT, which keeps track of consecutive LBT failures due to backoff. For instance, the MAC layer receives the above-mentioned LBT backoff indication when a failure due to backoff occurs, and the consecutive LBT backoff tracking circuitry 1286 accumulates the LBT backoff indications corresponding to consecutive failures due to backoff.

Further provided, and also shown in Fig. 10, is a scheduling node 1010 or base station, such as a gNodeB. Scheduling node 1010 and UE 1060 perform communication over a wireless channel, such as an unlicensed channel, in a wireless communication or cellular system. The scheduling node 1010 comprises scheduling node circuitry 1030 which, in operation, generates a configuration of at least one of
- a triggering timer to be started by a user equipment, UE, upon determining listen before, talk, LBT failure if the triggering timer is not running, upon expiry of which it is to be determined by the UE whether a counter started upon determining LBT failure has reached a threshold value, and
- a number N of consecutive LBT failures due to LBT failure upon determining of which the counter is to be incremented.

The scheduling node 1010 further comprises a scheduling node transceiver 1020 which, in operation, transmits, via Radio Resource Control, RRC, signaling, the configuration to the UE, and performs reception of data from the UE in accordance with the configuration. For instance, performing reception in accordance with the configuration includes receiving or awaiting reception of data from the UE on another bandwidth part or, if no data is received from the UE within a time interval available for transmission attempts on the configured BWPs, determine that the UE will connect to another cell.

For instance, the scheduling node circuitry 1030 comprises consistent LBT failure configuring circuitry 1035.

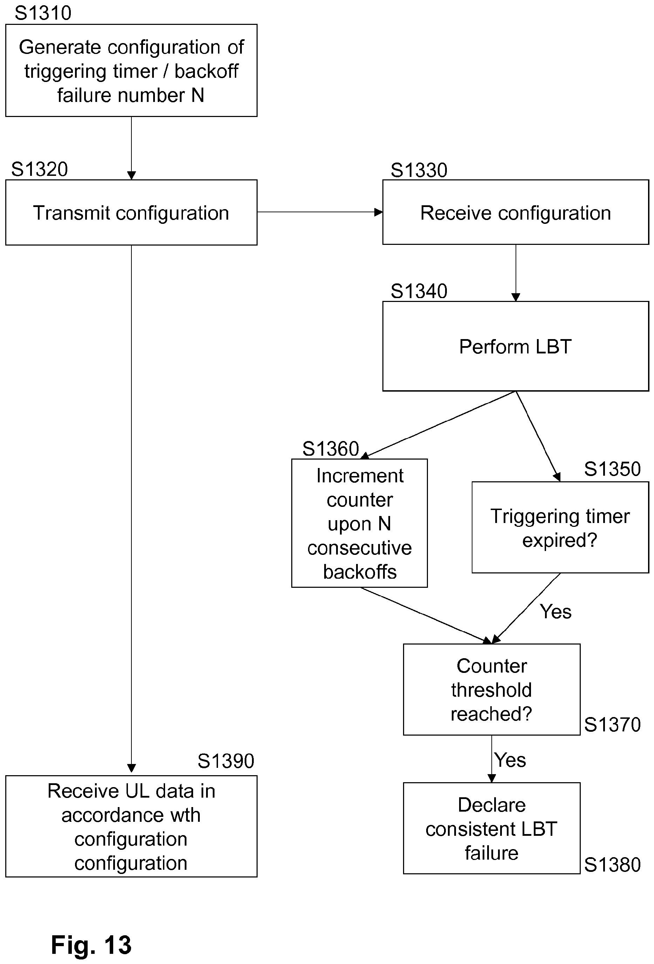

In correspondence with the UE 1060 and the scheduling node 1010, provided are a communication method for a UE and a communication method for a scheduling node, which are both shown in **Fig. 13**, where steps of the scheduling node are shown on the left-hand part, and steps of the UE method are shown on the right-hand part.

The method to be performed by the scheduling node includes generating S1310 a configuration of at least one of a triggering timer to be started by a user equipment, UE, upon determining listen before, talk, LBT failure if the triggering timer is not running, upon expiry of which it is to be determined by the UE whether a counter started upon determining LBT failure has reached a threshold value, and a number N of consecutive LBT failures due to LBT failure upon determining of which the counter is to be incremented. The scheduling node transmits, S1320, the configuration via RRC signaling, to the UE, by which the configuration of the triggering timer and or of the number N of consecutive LBT failures due to ongoing backoff is received.

The method to be performed by the UE includes performing LBT, step S1340, and performing at least one of
- incrementing a counter upon determining LBT failure, and starting a triggering timer upon determining LBT failure if the triggering timer is not running, and determining whether the counter has reached a threshold value upon expiry S1350 of the triggering timer; and
- incrementing S1360 the counter upon determining a number N of consecutive LBT failures due to ongoing LBT backoff.

In step S1370, the UE determines whether the counter has reached a threshold value. In the case of maintaining a triggering timer, step S1370 is only performed upon determining S1350 that the triggering timer has expired. If the threshold value of the counter has been reached, consistent LBT failure event is declared S1380.

The scheduling node method further comprises receiving S1390 data in accordance with the configuration.

In some embodiments, the UE circuitry 1080, in operation, starts or restarts a LBT failure detection timer upon each LBT failure, and resets the counter upon expiry of the LBT failure detection timer. The LBT failure detection timer may correspond to the above-described LBT failure detection timer from the baseline mechanism. The LBT failure detection timer may be kept in addition to either one or both of the triggering timer and the number N of consecutive LBT failures due to ongoing backoff.

As has been described, the present disclosure includes embodiments in which a triggering timer is kept by the UE as well as embodiments in which a number N of consecutive failures due to ongoing backoff is kept track of. Furthermore, in some embodiments, the triggering timer and the number N of consecutive failures due to ongoing backoff may be combined.

Both the triggering timer and the number N of consecutive failures due to ongoing backoff may be configured by higher layer signaling such as RRC signaling.

### Triggering timer

In some embodiments where the triggering timer is used, the triggering timer (possibly in addition to the LBT failure detection timer) is started when the first LBT failure occurs and is detected. For instance, the first LBT failure occurs at a first attempt of the UE acquiring the channel by LBT for transmitting a particular piece of data on the uplink in the unlicensed channel. Anyway, when a first LBT failure occurs, neither the LBT failure detection timer nor the triggering timer is running. While the triggering timer is running, a consistent LBT failure event (e.g. declaring consistent LBT failure), is not triggered. Once the triggering timer expires, the UE checks whether the counter has reached the configured threshold.

As described above, the triggering timer may be configured by RRC signaling. The triggering timer may also be referred to as "LBT failure recovery extended timer". Accordingly, as an example of signaling, the name of the triggering timer in an information element in the RRC signaling may be LBTFailureRecoveryExtendedTimer or "LBTFailureTriggeringTimer", as shown below:

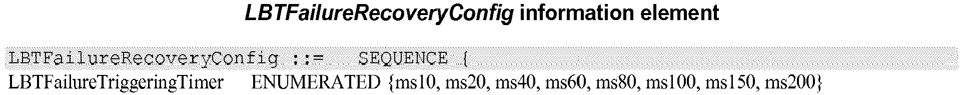

For instance, the value of the triggering timer is determined based on a configured number of BWPs or channels, such as a number of BWPs available to the UE for performing uplink transmissions. For instance, a longer triggering timer value is chosen for a lower number of configured BWPs, and vice versa. E.g., a total time interval available for the UE for performing a transmission on time is divided among the available BWPs, and the duration of the triggering timer is configured based on the result of such a division.

The triggering timer may either run continuously until it expires, or stop when the LBT failure detection timer expires. Thus, in some embodiments, the triggering timer stops upon expiry of the LBT failure detection timer. In some embodiments, the triggering timer runs until expiring irrespective of the LBT failure detection timer.

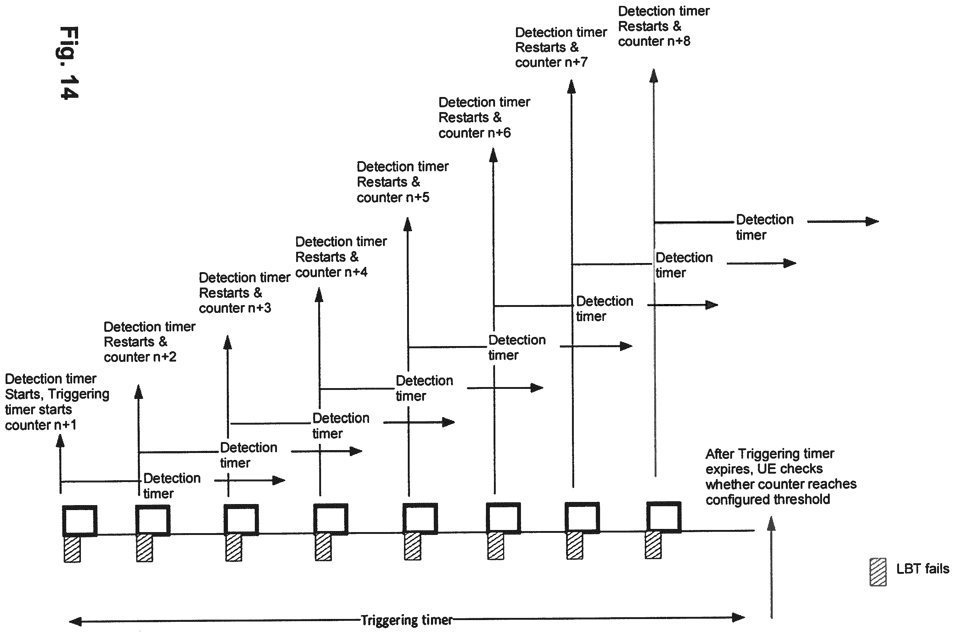

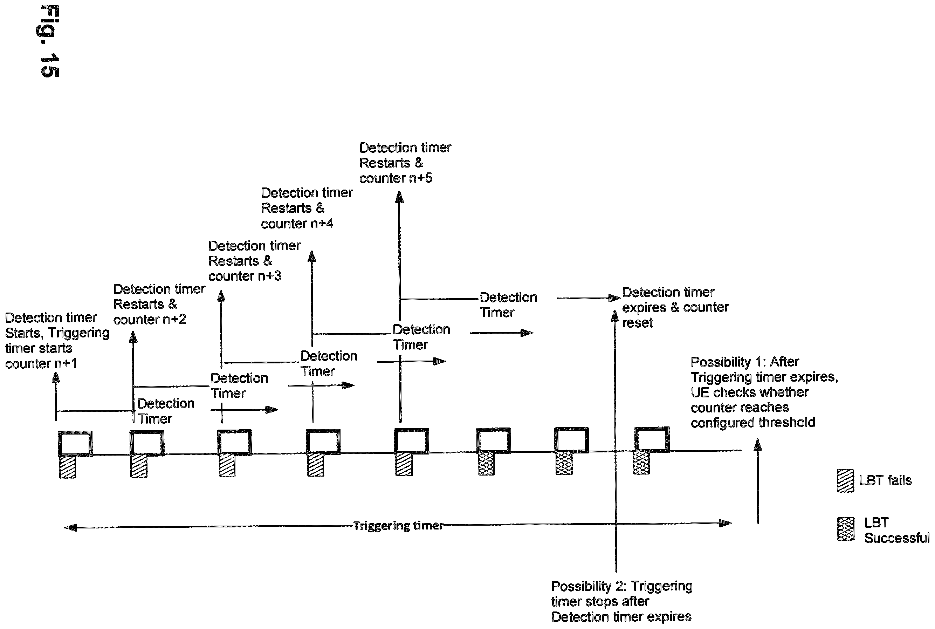

Examples of the triggering timer and the LBT failure detection timer are shown in **Figures 14** **and** **15**. In Fig. 15, it is shown that the LBT failure declaring timer has expired before expiry of the triggering timer, and the counter is reset accordingly. In the example of Fig. 14, the LBT failure detection timer is still running at the expiry of the triggering timer, and no reset of the counter takes place.

As shown in Figures 14 and 15, in some embodiments, a duration of the declaring triggering time is longer than a duration (or more particularly, a single duration from starting or restarting until expiry without any restarts) of the LBT failure detection timer. However, the disclosure is not limited thereto, and both timers may for example also have the same configured duration. Moreover, the present disclosure further comprises embodiments in which the triggering timer is kept without using a LBT failure detection timer.

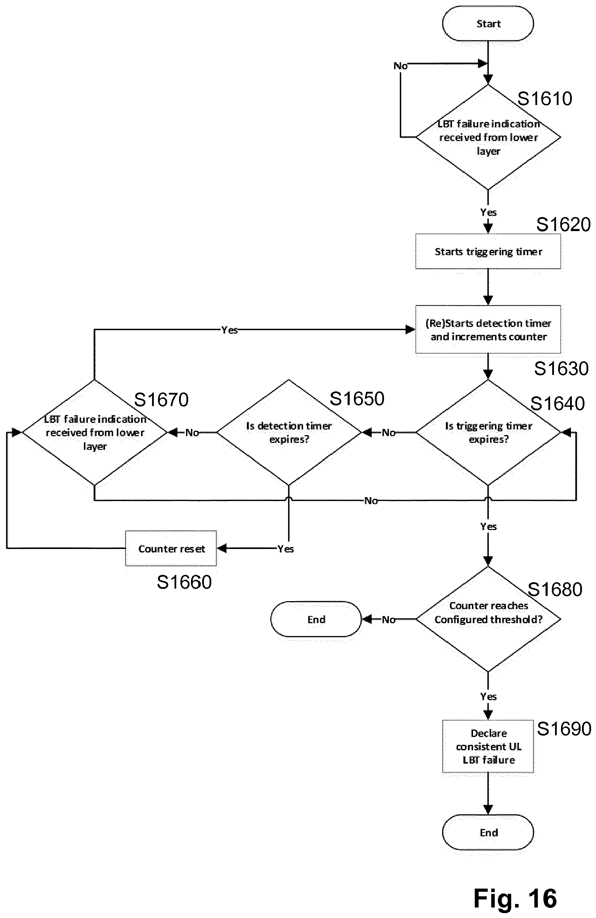

A flow chart of steps for detecting and declaring consistent UL LBT failure according to exemplary embodiments is shown in **Fig. 16****.** For instance, these steps are performed by UE circuitry 1080 on the MAC layer or by MAC layer circuitry.

In step S1610, it is checked whether a LBT failure indication is received from a lower layer such as the PHY layer. Step S1610 refers to checking whether a first LBT failure indication is received while the triggering timer is not running. If a LBT failure indication is received, the triggering timer and the LBT failure detection timer (or "detection timer" for short) are started, steps S1620, S1630. When the triggering timer and the LBT failure detection timer are running, the triggering timer is checked for expiry, step S1640. Step S1640 corresponds to step S1350 from Fig. 13.

If step S1640 determines that the triggering timer has not expired, it is checked S1650 whether the LBT failure detection timer has expired. If yes, the counter counting LBT failure indications is reset, S1660, and then it is proceeded to step S1670. If no, the method proceeds to step S1670 without resetting the counter. In step S1670, it is checked whether a LBT failure indication is received from the lower layer, S1670. Step 1670 refers to checking for LBT failure indications different from the first LBT failure indication when the triggering timer is already running.

If it is determined in step S1670 that an LBT failure indication is received, the counter is incremented, and the method returns to step S1630 where the LBT failure detection timer is reset. If no reception of an LBT failure indication is determined in step S1670, the method returns to Step 1640 where it is checked whether the triggering timer has expired.

If step S1640 determines that the triggering timer has expired, it is checked, S1680, whether the counter has reached the configured threshold. Step S1680 corresponds to step S1370 from Fig. 13. If yes, the UE declares consistent UL LBT failure, Step S1690 (corresponding to step S1380 from Fig. 13).

### Counter increment after N consecutive failures due to backoff

In some embodiments, the counter is not incremented for each LBT failure due to ongoing backoff, but only after determining N consecutive LBT failures due to ongoing backoff.

In some embodiments, the UE circuitry 1080 contains a MAC layer ("MAC layer circuitry") and a PHY layer ("PHY layer circuitry"). The PHY layer generates a LBT failure indication upon determining LBT failure if a channel on which the UE operates is busy, and generates an LBT backoff indication upon determining LBT failure if LBT backoff is ongoing. LBT backoff is additional slot duration where UE has to sense the channel until K=0 as shown in Fig 7. The MAC layer circuitry, in operation, increments the counter upon receiving, from the PHY layer circuitry, the LBT failure indication and upon receiving LBT backoff indications at N consecutive transmission occasions.

Accordingly, instead of an LBT failure indication, a LBT backoff indication is sent from the physical layer to the MAC layer in some cases. This may facilitate preventing or avoiding counting of LBT instances too fast.

In particular, the one hand, an LBT failure indication is transmitted when a UL transmission has failed due to the channel being busy during an unsuccessful initial CCA. For instance, this initial CCA is performed to check or determine whether the channel is idle for an initial CCA period, as shown in Fig. 7. In the case of receiving an LBT failure indication, the MAC layer increases the counter (which may also be called "LBT failure counter") by 1.

On the other hand, when an UL transmission has failed due to ongoing backoff, an LBT backoff indication is sent from the PHY layer to the MAC layer rather than the LBT failure indication. On the MAC layer, backoff indications received from the lower layer are accumulated. For instance, the MAC layer maintains a first counter and a second counter, the first counter (which is also referred to in this application simply as "counter") being the LBT failure counter mentioned above. The second counter, which counts accumulated LBT backoff indication, may be called "LBT backoff counter".

After receiving N consecutive backoff indications from lower layer, e.g. when the LBT backoff counter has reached value N, the LBT failure counter is increased by 1. The expression "Consecutive failures due to ongoing backoff" refers to LBT failures at consecutive uplink transmission occasions and associated backoff periods, which may have a periodicity of one or more slots or one or more other transmission time intervals. If no LBT failure occurs due to ongoing backoff occurs and a transmission can be performed on the channel, the accumulated number of LBT backoff indications, such as the LBT backoff counter, is reset to zero.

The number N of consecutive LBT failures for incrementing the LBT failure counter may be configured by RRC signaling, for example, as shown in the following information element, which may be called *LBTFailureRecoveryConfig* information element: 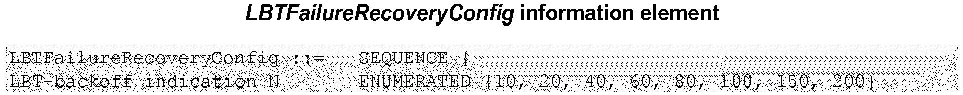 For instance, the initial CCA period is shorter than the backoff period. Hence, by delaying or slowing down the counting up of the LBT failure counter, avoiding "too early" UL LBT failure declaration may be facilitated.

Another motivation for slowing down the counter during backoff is as follows: When the UE fails with the initial CCA, this means that the channel is busy. On the other hand, when the UE performs backoff, the channel may be either idle or busy. Thus, there is a chance of successful transmission when performing the backoff.

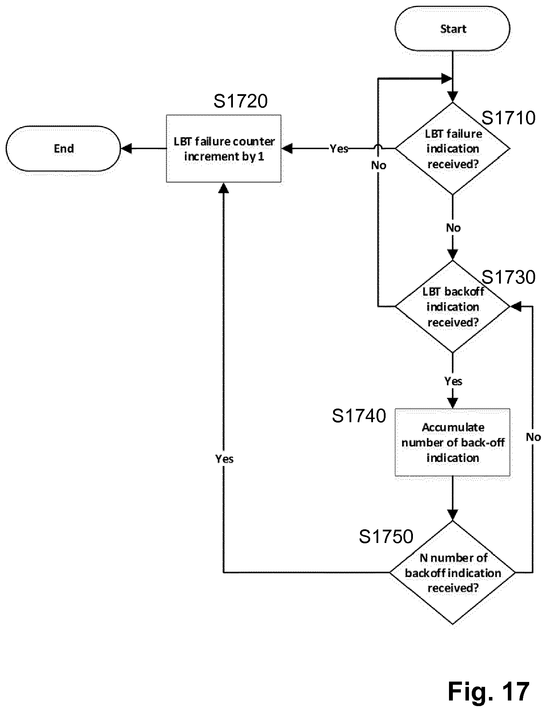

A flow chart of method steps performed on the MAC layer of the UE in an embodiment where an LBT backoff indication and a configured number N of LBT failures due to ongoing backoff are used is shown in **Fig. 17****.**

In step S1710, it is checked whether an LBT failure indication is received. If yes, the LBT failure counter is incremented (e.g., increased by 1), step S1720. If no, it is checked in step S1730 whether a LBT backoff indication is received. If yes, the number of received backoff indications is accumulated, S1740 (e.g. by incrementing the above-mentioned LBT backoff counter). If it is determined, S1750, that a number N of backoff indications have been received by the MAC layer, the step S1720 of incrementing the LBT failure indication counter is performed.

As described so far, when accumulating a number N of LBT failures due to ongoing backoff, LBT parameters such as the random counter K mentioned in the description accompanying Fig. 7, which shows the LBT procedure on the PHY layer, need not be known to the MAC layer. However, the present disclosure also provides embodiments where an LBT parameter, e.g. LBT CAT-4 (category 4) parameter, such as a current value of parameter K, is known to the MAC layer. Accordingly, PHY layer and MAC layer may both check LBT parameters before initiating any UL LBT transmission. Thus, the PHY layer keeps informing and updating the MAC layer about the current value of random counter parameter K. The MAC layer may then initiate a UL transmission request only if there is no ongoing backoff (i.e., K=0), and not initiate a UL transmission request if backoff is ongoing.

Accordingly, in some embodiments, wherein the PHY layer circuitry, in operation, reports, to the MAC layer circuitry, a current value of an LBT parameter indicating whether LBT backoff is ongoing, and the MAC layer circuitry, in operation, initiates a transmission request under a condition of determining, based on the current value of the LBT parameter, that no LBT backoff is ongoing. If the MAC layer refrains from initiating transmissions at occasions when the channel is busy due to on-going backoff, this may further contribute to slow down and delay triggering the consistent UL LBT failure event, since unnecessary attempts to perform transmissions may be reduced.

As already described above, the MAC layer accumulates failed transmission/ LBT failures due to ongoing backoff, and increases the LBT failure counter by one if N consecutive UL transmissions are dropped due to ongoing backoff. Thus, the MAC needs to be aware if PHY-initiated transmissions are dropped due to on-going backoff. To this end, LBT backoff indications may be sent from PHY layer to MAC layer, as described above.

Also in embodiments where the LBT parameter K is known to the MAC layer, the number N of consecutive failures required for incrementing the LBT failure counter may be configured by RRC in an information element such as the *LBT Failure Recovery Config* information element shown above.

| | K unknown to MAC | K known to MAC |
|---|---|---|
| LBT parameter K (Backoff status) | Not known to MAC | Known to MAC |
| UL transmission | MAC initiates UL transmissions at any time | MAC initiates UL transmissions only when value of K=0 |
| LBT back-off indication | Sent to MAC when MAC and PHY initiate UL transmission are not transmitted due to back-off is running | Sent to MAC when PHY initiates transmission is not transmitted due to back-off is running |
| LBT failure indication | When PHY and MAC transmission is not transmitted due to initial CCA failed | When PHY and MAC transmission is not transmitted due to initial CCA failed |
| Counting mechanism when transmissions is not transmitted due to back-off is running | PHY sent back off indication for MAC and PHY initiated UL transmissions. MAC accumulate back-off indication and increases counter by 1 when N number of back-off indication received. | PHY sent back-off indication for PHY initiated UL transmission. MAC accumulate number of transmission (i.e. initiated either by MAC or PHY) which is dropped due to back-off is running. MAC increase counter by 1 when N number of UL transmissions is dropped. |

In the sections above, embodiments using a Triggering timer and embodiments using tracking of a number N of consecutive failures due to ongoing backoff have been described. However, in addition to applying one of these approaches, the present disclosure further provides embodiments where both approaches are combined. In these embodiments, a triggering timer as well as a number N of consecutive failures due to ongoing backoff may be configures and kept on the MAC layer. For example, UE starts triggering timer upon receiving LBT failure indication from lower layer and increases counter by 1. While triggering timer is running, UE increases counter by 1 if LBT failure indication and N number of consecutive back-off indication received from lower layer. Upon triggering timer expires, UE declares consistent LBT failure event if counter reaches configured threshold value. The benefit is that UE doesn't declare consistent LBT failure event too fast. Further, such combination of approaches can be used with the backoff status (e.g. the LBT parameter K) being either unknown or known on the MAC layer. Such combination of approaches may facilitate providing flexibility in determining to what extent the triggering of the consistent LBT failure event should be delayed.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

## Claims

1. A user equipment, UE,
comprising:
a transceiver which, in operation, performs listen before talk, LBT; and
circuitry which, in operation, performs at least one of:
incrementing a counter upon determining LBT failure, starting a triggering timer upon determining LBT failure if the triggering timer is not running, and determining whether the counter has reached a threshold value upon expiry of the triggering timer; and
incrementing the counter upon determining a number N of consecutive LBT failures due to ongoing LBT backoff; and
declares consistent LBT failure upon determining that the counter has reached the threshold value.

2. The UE according to claim 1, wherein the circuitry, in operation,
starts or restarts a LBT failure detection timer upon determining each LBT failure, and resets the counter upon expiry of the LBT failure detection timer.

3. The UE according to claim 2, wherein a duration of the triggering timer is longer than a duration of the LBT failure detection timer.

4. The UE according to claim 2 or 3, wherein the triggering timer stops upon expiry of the LBT failure detection timer.

5. The UE according to claim 2 or 3, wherein the triggering timer runs until expiring irrespective of the LBT failure detection timer.

6. The UE according to claim 1 or 2, wherein the circuitry includes medium access control, MAC, layer circuitry, and physical, PHY, layer circuitry,
the PHY layer circuitry, in operation, generates an LBT failure indication upon determining LBT failure if a channel on which the UE operates is busy, and generates an LBT backoff indication upon determining LBT failure if LBT backoff is ongoing, and the MAC layer circuitry, in operation, increments the counter upon receiving, from the PHY layer circuitry, the LBT failure indication and upon receiving LBT backoff indications at N consecutive transmission occasions.

7. The UE according to claim 6, wherein the PHY layer circuitry, in operation, reports, to the MAC layer circuitry, a current value of an LBT parameter indicating whether LBT backoff is ongoing, and
the MAC layer circuitry, in operation, initiates a transmission request under a condition of determining, based on the current value of the LBT parameter, that no LBT backoff is ongoing.

8. The UE according to any of claims 1 to 7, wherein said triggering timer or said number N of consecutive LBT failures due to ongoing LBT backoff is configured by Radio Resource Control, RRC, signaling.

9. A scheduling node, comprising
circuitry which, in operation, generates a configuration of at least one of
a triggering timer to be started by a user equipment, UE, upon determining listen before, talk, LBT failure if the triggering timer is not running, upon expiry of which it is to be determined by the UE whether a counter started upon determining LBT failure has reached a threshold value, and
a number N of consecutive LBT failures due to LBT failure upon determining of which the counter is to be incremented; and
a transceiver which, in operation, transmits, via Radio Resource Control, RRC, signaling, the configuration to the UE, and receives, from the UE, and performs reception of data from the UE in accordance with the configuration.

10. A communication method to be performed by a user equipment, UE, including:
performing listen before talk, LBT;
performing at least one of:
incrementing a counter upon determining LBT failure, starting a triggering timer upon determining LBT failure if the triggering timer is not running, and determining whether the counter has reached a threshold value upon expiry of the triggering timer; and
incrementing the counter upon determining a number N of consecutive LBT failures due to ongoing LBT backoff; and
declaring consistent LBT failure upon determining that the counter has reached the threshold value.

11. The method according to claim 9, including:
starting or restarting a LBT failure detection timer upon determining each LBT failure; and resetting the counter upon expiry of the LBT failure detection timer.

12. The method according to claim 11, wherein a duration of the triggering timer is longer than a duration of the LBT failure detection timer.

13. The method according to claim 10 or 11,
including, on a physical, PHY, layer:
generating an LBT failure indication upon determining LBT failure if a channel on which the UE operates is busy,
generating an LBT backoff indication upon determining LBT failure if LBT backoff is ongoing, and
including, on a medium access control, MAC, layer, incrementing the counter upon receiving, from the PHY layer circuitry, the LBT failure indication and upon receiving LBT backoff indications at N consecutive transmission occasions.

14. The method according to claim 13, including:
reporting, to the MAC layer, a current value of an LBT parameter indicating whether LBT backoff is ongoing, and
initiating a transmission request from the MAC layer under a condition of determining, based on the current value of the LBT parameter, that no LBT backoff is ongoing.

15. A communication method for a scheduling node, comprising:
generating a configuration of at least one of
a triggering timer to be started by a user equipment, UE, upon determining listen before, talk, LBT failure if the triggering timer is not running, upon expiry of which it is to be determined by the UE whether a counter started upon determining LBT failure has reached a threshold value, and
a number N of consecutive LBT failures due to LBT failure upon determining of which the counter is to be incremented; and
transmitting, via Radio Resource Control, RRC, signaling, the configuration to the UE,
performs reception of data from the UE in accordance with the configuration.
